# EUROPEAN PATENT SPECIFICATION

(11) **EP 4 705 386 B1**
(45) Date of publication and mention of the grant of the patent: **09.12.2026**
(21) Application number: 24721739.1
(22) Date of filing: 29.03.2024
(51) Int. Cl.: C08J 5/22, C25B 1/04, B01J 41/14, C25B 13/08

(54) **ANIONIC EXCHANGE MEMBRANE**
ANIONENAUSTAUSCH-MEMBRAN
MEMBRANE ECHANGEUSE D'ANIONS

(30) Priority: 05.05.2023 IT 202300008916
(43) Date of publication of application: 11.03.2026
(73) Proprietor: NE.M.E.SYS. Srl, 50019 Sesto Fiorentino (IT)
(72) Inventor: MATTEINI, Marco, 50019 Sesto Fiorentino (FI) (IT); TAMPUCCI, Alessandro, 50019 Sesto Fiorentino (FI) (IT); LENTINI, Domenico, 50019 Sesto Fiorentino (FI) (IT)
(74) Representative: Leotta, Antonio
(86) International application number: PCT/IB2024/053100
(87) International publication number: WO 2024/231748

(56) References cited:
- US-A- 4 705 636
- US-A1- 2020 030 787
- LUO Y ET AL: "Quaternized poly(methyl methacrylate-co-butyl acrylate-co-vinylbenzyl chloride) membrane for alkaline fuel cells", JOURNAL OF POWER SOURCES, ELSEVIER, AMSTERDAM, NL, vol. 195, no. 12, 15 June 2010 (2010-06-15), pages 3765 - 3771, XP026905923, ISSN: 0378-7753, [retrieved on 20100114], DOI: 10.1016/J.JPOWSOUR.2009.12.106
- SUN KOO JIN ET AL: "Synthesis and properties of an anion-exchange membrane based on vinylbenzyl chloride-styrene-ethyl methacrylate copolymers", JOURNAL OF MEMBRANE SCIENCE, vol. 423-424, 1 December 2012 (2012-12-01), NL, pages 293 - 301, XP093098718, ISSN: 0376-7388, DOI: 10.1016/j.memsci.2012.08.024

## Description

### TECHNICAL SECTOR

This invention concerns an anionic exchange membrane, in particular for use in electrolysers and fuel cells.

The invention also concerns a method for the production of an anionic exchange membrane.

### STATE OF THE ART

The main types of electrolyzer that can be used for hydrogen production are four: alkaline (AEL), solid polymer (PEM), anionic exchange membrane (AEM) and solid oxide (SOEC). The first two are already well positioned in the market and have stacks (the set of electrochemical cells where water molecules are split into oxygen and hydrogen) with power on the scale of MW. The other two have stack power in the scale of kW and with a reduced service life.

The AEL electrolyzer operates at low temperature and has a low cost. Being a widely used technology, it has a consolidated supply chain and production capacity. However, it has a limited response to fluctuations of electrical inputs, so its coupling with renewable sources is difficult.

PEM electrolysis systems use a solid electrolyte. They offer faster dynamic response, compact design and increased energy efficiency. The proton exchange membrane significantly limits the passage of hydrogen and allows high-pressure operation, with reduced energy for the hydrogen compression and storage. However, PEM systems have a high baseline consumption so even these systems are not suitable to be coupled to renewable sources, especially solar due to consumption at night.

The AEM electrolyser combines the advantages of PEM and AEL systems. It has a low cost of the materials used, with energy density and efficiencies comparable to PEM technology. AEM electrolysers currently reach up to 2.4 kW and the membranes currently available on the market have not achieved sufficient stability, limiting the widespread adoption of this technology in electrolysis applications.

Finally, the SOEC electrolyzer has the advantage of achieving high degrees of efficiency while operating at high pressures and using catalysts of non-noble material. It offers good development potential but today has a limited commercial use due to the low service life due to high operating temperatures.

PEM and AEM systems commonly use polymer membranes placed between the anode and the cathode, with the function of ion transport from one semi-cell to another. For this reason, membranes able to migrate H+ ions (Proton Exchange Membrane, PEM) are used in systems that operate in an acid environment, while membranes able to circulate hydroxide ions are used in those systems that operate in an alkaline environment (Anion Exchange Membrane, AEM).

AEM is obtained by synthesizing ionic polymers with positive charges, responsible for the migration of negatively charged hydroxide ions. Considering the unique operating characteristics of these devices, the properties of the polymeric materials used have to complain with very stringent requirements. First of all, they must be equipped with a high working pH stability, in order to avoid undesirable degradation phenomena that would cause uncontrolled membrane breaking. In addition, to optimize electrochemical performance, polymer materials and membranes obtained from them must exhibit high ionic conductivity. Finally, a not negligible aspect are the mechanical properties, to allow to operate even in the presence of pressure gradients between the two semi-cells.

Compared to the first two types of electrolysers mentioned, AEM have a limited diffusion because AEM membranes have greater limits especially in relation to stability and mechanical properties that, by the way, limit the size of the stacks to a few KW.

In view of the above, AEM electrolysers are mainly used in combination with renewable sources. However, because of the size limits of the stacks, a large number of AEM electrolyzer modular stacks are used when they have to be combined with MW or even GW capacity renewable sources plants, which involve a significant increase in both production and operating costs.

In almost all known AEM membranes, positive charges responsible for the migration of hydroxide ions, are obtained by the formation of quaternary ammonium salts. AEM anionic exchange membranes operate in a highly alkaline environment and one of the most well-known degradation mechanisms for quaternary ammonium salts at such pH is the elimination of Hoffman. It occurs by removing a hydrogen in β to the nitrogen atom, resulting in the formation of a double bond and elimination of the amine.

Furthermore, nucleophilic substitution on the nitrogen atom of ammonium by a hydroxide ion can take place. This mechanism leads to the loss of quaternary ammonium salt and the formation of an alcohol on the polymer chain (not able to easily conduct ions), inhibiting ion transport activity. A solution to this problem is to sterically hinder the chemical surroundings of the nitrogen atom.

These phenomena reduce over time the number of active sites responsible for the migration of hydroxide ions (OH-), resulting in a loss of ionic conductivity.

Although ammonium salts in general are subject to such limitations, they can be prevented using amines that do not have hydrogens in β or, for reasons of steric hinderance, do not allow easy removal (D. Henkensmeier, M. Najibah, C. Harms, J. Žitka, J. Hnát, K. Bouzek, J. Electrochem. Energy Convers. Storage 2021, 18,024001).

A recent study shows that piperidinic ammonium salts, although difficult to prepare, are able to give high chemical resistance (M. G. Marino, K. D. Kreuer, ChemSusChem 2015, 8, 513).

The possibility of making anionic membranes in which ammonium salts are obtained as reaction products of piperidine compounds is anticipated in US2020/0030787 A1.

There is also extensive scientific literature documenting the use of polymers containing heteroatoms within the main chain. However, sites are generated that are susceptible to attack by hydroxide ions, which leads to a breakdown of the chain and the consequent reduction of the average molecular weight (Merle G, Wessling M, Nijmeijer K (2011) J Membr Sci, 377:1-35).

Degradation of the main polymer chain during use of AEM in the cell leads to loss of mechanical properties, resulting in membrane breaking and rapid abatement in the performance of electrochemical devices.

For the electrochemical reactions to take place, it is necessary that, in addition to the hydroxide ions, the membrane is also permeated by water molecules. However, an excess of water molecules inside the membrane leads to problems such as:
- swelling;
- variation in the size of the polymer film;
- mechanical weakening.

Excessive dimensional variations can lead to non-optimal membrane adhesion with the electrodes and device failure. Mechanical weakening, on the other hand, can lead to membrane breaking, especially in devices operating under pressure. To implement the mechanical properties of membranes, polymeric chain crosslinking strategies are often used. These, however, are difficult to control and, if in excess, can impart excessive rigidity to the membrane and facilitate its breaking. (T.Y. Son, T.H. Ko, V. Vijayakumar, K. Kim, S.Y. Nam, Solid State Ionics 344 (2020), 115153.)

Additionally, the known AEM membrane fabrication procedures involve laborious and complex synthesis using inexpensive reagents (Kimberly F. L. Hagesteijn1, Shanxue Jiang1 , and Bradley P. Ladewig1, J Mater Sci (2018) 53:11131-11150).

It's known, for example, that it's possible to make hydrophilic polymer composite membranes and hydrophobic porous supports of a polymeric nature. In these solutions, although there is an increase in mechanical properties, the inertia of the polymer support makes the passage of hydroxide ions difficult by lowering the performance of the membrane. Moreover, the difference in chemical nature between the common hydrophobic supports used and the positively charged polymer leads to a low affinity and the formation of weak bonds between the two polymer phases. To overcome this problem, chemical and physical changes can be made to the surface of the polymer support, so that it exposes functional groups capable of covalently binding the polymer responsible for the migration of hydroxide ions. According to the known technique, these operations are carried out using complex techniques (e.g. plasma, corona) which, however, failing to penetrate deeply into the pores of the substrate cause ineffective or difficult to control changes. (T.Y. Son, T.H. Ko, V. Vijayakumar, K. Kim, S.Y. Nam, Anion exchange composite membranes composed of poly(phenylene oxide) quaternary ammonium and polyethylene support for alkaline anion membrane exchange fuel cell containing applications, Solid State Ionics 344 (2020), 115153).

In order to have a good conductivity of the hydroxide ions without excessively increasing the number of active sites segregation of the positive charges must be searched in order to form "ion channels" that are continuous positively charged zones that cross the membrane and act as preferential pathways for hydroxide ions. Although the importance of ion channels is recognized in the literature, there are no simple and effective methods for obtaining them. (G. Arges et al. vj. Mater. Chem. A, 2017, 5, 5619).

The publication LUO Y ET AL: "Quaternized poly(methyl methacrylate-co-butyl acrylate-co-vinylbenzyl chloride) membrane for alkaline fuel cells", JOURNAL OF POWER SOURCES, ELSEVIER, AMSTERDAM, NL, vol. 195, No. 12, 15 June 2010 (2010-06-15)pages 3765-3771 describes a method of making a membrane by means of copolymerization of specific functional monomers from a random poly(methyl methacrylate-co-butyl acrylate-co-vinylbenzyl chloride) copolymer which is synthesized by copolymerization followed by quaternization and finally by "membrane casting", therefore not using any kind of support. The copolymer does not have styrene units and ammonium salts derived from / pyrrolidine piperidine units and PTFE is used exclusively as a component in the preparation of electrochemical cell electrodes, but not as a support for active membrane copolymer.

Given the interest in AEM devices, due in particular to their advantageous use in combination with renewable sources, there is a need to develop alternative solutions of AEM membranes, preferably able to show mechanical strength and durability, associated with high ion conduction capacity.

### SYNTHESIS OF THE INVENTION

The purpose of the present invention is to propose an anionic exchange membrane (AEM) that shows good mechanical strength and durability characteristics, associated with a high conductivity of ions.

Another purpose of this invention is to propose an anionic exchange membrane that combines high performance in terms of mechanical strength, durability and conduction, together with very low production costs.

Another purpose of the present invention is to propose a method for the realization of anionic exchange membranes that allows to realize membranes with high performance at very low production costs.

Another purpose of the invention is to propose a method for the realization of anion exchange membranes that allows to produce large format membranes with high mechanical performance, durability and conductive capacity at low cost.

According to a first aspect of the invention, the aforementioned purposes are obtained by means of an anionic exchange membrane according to claim 1. In particular, the membrane comprises a porous polyolefin material support to increase mechanical strength and a polyfunctional copolymer containing monomeric units (non acrylic) with positive charges capable of migrating hydroxide ions and paraffinic groups of monomer units derived from acrylic monomers with linear saturated alkyl chains having a carbon number equal to or greater than 3. Therefore said copolymer in addition to providing the positive charges for the migration of OH- is able to bind chemically with the support in polyolefin material (paraffin), through hydrophobic interactions.

The support in porous polyolefin material guarantees high mechanical resistance to the membrane. Active copolymer is a polyfunctional copolymer containing monomer units (not acrylic) with positive charges capable of migrating hydroxide ions and paraffinic groups of monomeric units derived from acrylic monomers with linear saturated alkyl chains having a carbon number equal to or greater than 3. Hence, The copolymer, in addition to providing positive charges for migration of OH-, is able to bind chemically with the support in polyolefin material (paraffinic) through hydrophobic interactions.

The saturated linear alkyl chains (paraffinic) of the monomeric units derived from acrylic monomers of sufficient copolymer length interact with the similar saturated linear chains exposed on the surface of the polyolefin support obtaining two effects:
- an adhesion of the active copolymer on the support, thus making it possible to obtain an anionic exchange membrane with high mechanical properties and durability;
- the formation of two phases, one hydrophobic and one conductive-hydrophilic, segregation of the positive charges of the active copolymer within the pores of the polyolefin support; encouraging the formation of ion channels with positive charge that facilitate the migration of hydroxide ions and allow the achievement of high performance within electrochemical cells.

Advantageously, the active copolymer consists of units of alkyl acrylates, styrene units and vinyl-benzyl units with benzyl-bound substituents, those substituents belong to the family of piperidines and/or pyrrolidines, preferably N-alkyl-piperidine and/or N-alkyl-pyrrolidine.

Piperidines and/or pyrrolidines bind via the chloromethyl group of vinyl benzene units to form positively charged quaternary ammonium groups.

The use of quaternary ammonium ions piperidinium and/or pyrrolidinium, which due to their cyclic nature are difficult to attack by hydroxide ions, allows to combine high ion exchange capacities and conductivity to a high durability.

Still advantageously, active copolymer consists of the polymerization product of at least:
a. Acrylic monomers with saturated linear alkyl chains having a carbon number equal to or greater than 3;
b. vinyl-benzyl monomers having a methyl chloride group bound to the aromatic ring;
c. and vinyl-aromatic monomers
with tertiary piperidine and/or pyrrolidine amines.

Advantageously , tertiary piperidinic and/or pyrrolidinic amines include at least one of 1-methylpiperidine, 1-ethylpiperidine, 1-propylpiperidine, 1-buthylpiperidine, 1,2,6-trimethylpiperidine, 1,2,6-triethylpiperidine, 1,2,6-tripropylpiperidine, 1,2,2,6,6-pentamethylpiperidine, 1-methylpyrrolidine, 1-ethylpyrrolidine, 1-propylpyrrolidine, 1,2,5-trimethylpyrrolidine.

Advantageously, acrylic monomers are esters of acrylic acid that bind a linear chain of saturated hydrocarbons to the external oxygen atom.

Still advantageously acrylic monomers include at least one between propyl acrylate, butyl acrylate, pentyl acrylate, hexyl acrylate, octyl acrylate, nonyl acrylate, decil acrylate, undecil acrylate, dodecyl acrylate, tridecrylate, acrylate tetradecyl, pentadecyl acrylate, hexadecyl acrylate, heptaecil acrylate, octadecyl acrylate, nonadecil acrylate, icosil acrylate, propyl methacrylate, butyl methacrylate, pentyl methacrylate, hexyl methacrylate, octyl methacrylate, nonyl methacrylate, Decil methacrylate, undecyl methacrylate, dodecyl methacrylate, tridecyl methacrylate, tetradecyl methacrylate, pentadecyl methacrylate, hexadecyl methacrylate, heptacyl methacrylate, octadecyl methacrylate, nonadecil methacrylate, icosil methacrylate.

Vinyl-benzyl units with positively charged substituents are obtained as a reaction product of vinyl-benzyl groups containing a methyl chloride group bound to the aromatic ring with at least one tertiary piperidine and/or pyrrolidine amine having an alkyl group bound to the nitrogen atom. In this way we have the formation of quaternary ammonium salts.

The hydrophobic interactions that the linear aliphatic chains of the active copolymer establish with the support allow the formation of hydrophobic phases that interface with more hydrophilic phases with the exposure of quaternary ammonium salts in the support pores, resulting in the formation of hydrophilic domains with positive charges This leads to the obtaining of ion channels with positive charges, easily accessible to the hydroxyl anions present in the alkaline solution surrounded by hydrophobic phases that avoid the excessive accumulation of water in the membrane and its mechanical weakening.

Advantageously, the copolymer contains, in moles, from 3% to 10% of acrylic units, from 40% to 79% of vinyl-aromatic units and from 20% to 50% of vinyl-benzyl units replaced.

Still advantageously, the copolymer has a grade of average number polymerization between 200 and 500.

Advantageously, copolymer is obtained by using peroxidic radical initiators to promote the polymerization reaction.

In a preferred form of construction the polyolefin support is made of a polyethylene-based material chosen from LDPE, HDPE or UHMWPE.

In an alternative form of construction the polyolefin support is in a polypropylene-based material.

The use of a polyolefin support allows the considerable increase of the mechanical properties of the membrane compared to the obtaining of the same by casting the only active polymer, as is the case in the production of many anionic exchange membranes of known technique.

The use of an active polymer and a support not containing heteroatoms in the main chain allows to solve the problem of degradation in alkaline environment, as all the bonds of the main chain, both support and active copolymer are carbon-carbon sp3 covalent bonds that cannot be attached by OH anions.

In a preferred form of construction the polyolefin support has a porosity between 40% and 95% and an average pore size between 0.2 µm and 1.2 µm.

Advantageously, the adhesion of the copolymer to the support in polyolefin material is promoted by radical initiators and/ or radical stabilizers, in particular at least one olefin with aromatic and/ or hetero-aromatic group.

More specifically, the adhesion of the copolymer to the support in polyolefin material can be increased by grafting the active polymer to the support activated by means of radical initiators and co-agents able to stabilize the primary radical favouring the reaction combination versus degradation. In particular, this effect can be achieved by the use of at least one olefin with aromatic group and/ or hetero-aromatic appropriately replaced, such as e.g. 1-phenyl-methylacrylate or 1-furyl-methylacrylate.

Thanks to the presence of the polyolefin support the membrane has a high tensile strength, Young modulus between 4800 MPa and 5800 MPa and elongation percentage greater than 10%; This allows its use in electrolysers operating at high pressure values (greater than 30 Bar) without incurring breaking phenomena resulting in short-circuiting of the electrolytic cell.

The contained linear expansion (less than 10%) that occurs as a result of the absorption of water by the membrane allows its use in fuel cells operating with atmospheric oxygen input, avoiding the separation of the membrane from the electrodes in case of humidity changes.

According to another aspect of the invention, the mentioned purposes of the invention are achieved by a method for the realization of said anionic exchange membrane comprising phases of:
- promote by means of at least one peroxidic radical initiator the polymerisation of a mixture comprising:
   ii. Acrylic monomers with saturated linear alkyl chains having a number of carbon atoms equal to or greater than 3;
   iii. Vinyl-benzyl monomers having an aromatic ring methyl chloride group, and
   iv. vinyl aromatic monomers,
- activate the copolymer obtained by means of tertiary piperidine and/or pyrrolidine amines by promoting the formation of quaternary ammonium salts by substitution of at least one vinyl-benzyl chloride monomer, and
- promote the binding of the copolymer to a polyolefin support by immersion of a film of this polyolefin support in that copolymer in liquid solution in the presence of a polar solvent.

The method of invention allows to achieve with a simple process, safe and economical, an anionic exchange membrane with performance and mechanical characteristics comparable to those obtainable by promoting the grafting of active polymers on polymeric matrices with high mechanical characteristics through the use of γ rays which have costs extremely high especially due to stringent constraints related to the safety of use. These constraints make it economically disadvantageous to make anionic exchange membranes with a size greater than a certain limit, therefore also limiting the possibility of realizing with this technology high power plants if not using an extremely large number of low power electrochemical cells. Compared to well-known technologies that allow to obtain anionic exchange membranes of comparable performance, the invention method also allows to obtain anionic exchange membranes of much greater size at very competitive costs, thus opening to the possibility of creating electrolytic cells of greater power than is currently possible in electrolysers AEM of known technique.

In a preferred embodiment of the invention method, the copolymer activation phase takes place prior to the stage of promoting the binding of the copolymer to a polyolefin support and the polyolefin material support is polyethylene based.

In this case, when the polyethylene support is immersed in the copolymer in solution, saturated linear alkyl chains of monomeric units derived from acrylic monomers of sufficient copolymer length interact with the similar saturated linear chains exposed on the surface of the polyolefin support and following solvent evaporation present in solution, a chemical bond of hydrophobic interaction between the active copolymer and the support is realized.

In a favourite embodiment, the phase of promoting the binding of the copolymer to a polyolefin support occurs by adding in the liquid solution containing said copolymer and said porous polyolefin support a peroxidic radical activator and a radical stabilizer consisting of an olefin with aromatic and / or hetero aromatic group.

The addition of the radical activator and the radical stabilizer allows to promote between the polyolefin support, which in this case can be advantageously polypropylene, and the active copolymer, the formation of covalent bonds. In addition, in this case the adhesion of the copolymer to the polyolefin support can also be promoted before the activation of the copolymer.

### BRIEF DESCRIPTION OF THE DRAWINGS

Further characteristics and advantages of the invention will appear from the following description of forms of realization, given by way of example and not limited, with reference to the attached figures, in which:
- the FIG. 1 shows schematically the main chemical reactions by which an anionic exchange membrane is obtained according to the present invention;
- the FIG. 2 is a Cartesian diagram showing polarization curves at various temperatures of an electrolysis cell comprising an anionic exchange membrane as invented;
- the FIG. 3 is a table showing the results of measurements of water absorption (at 20°C and 80°C), thickness increase (at 20°C and 80°C) and linear expansion (at 20°C and 80°C) carried out in accordance with ISO
- the FIG. 4 is a table showing the result of measurements of tensile strength, Young modulus and percentage elongation carried out in accordance with ISO 153-7 on an anionic exchange membrane according to the invention.

### DETAILED DESCRIPTION OF PREFERRED EMBODIMENTS

In the description of specific examples of the realization of the invention that will be given in the following it is understood that the composition of the membrane according to the invention is not limited to the specific reagents mentioned and that the process of realization described is indicated in its essential steps as an expert in the field will recognize that the tools, the protocols and reagents used may vary and are not intended to limit the scope of the process. Also note that, as used here and in the attached claims, singular forms include the plural reference unless the context clearly indicates otherwise. Thus, for example, a reference to "a solvent" is a reference to one or more solvents and their equivalents known to the branch experts. Similarly, the combination "and/or" is used to indicate that one or both declared cases may occur, e.g., A and/or B include (A and B) and (A or B). Unless otherwise defined, the technical and scientific terms used here have the same meanings commonly understood by a person normally experienced in the field to which the process belongs.

Below, before describing the specific examples of the invention, some definitions of terms used in the text are given.

### DEFINITIONS

Anionic exchange membrane: a membrane consisting of a polymer that exposes positive charges capable of migrating the hydroxide ions if placed in an alkaline bath between the electrodes of an electrochemical cell.

Polyolefin material: material based on polyethylene and/or polypropylene.

Units with positive charges: units in the polymer chain that have an ammonium salt.

Acrylic monomers: monomers comprising acrylates and methacrylates with various substituents

Peroxy radical initiator: A radical initiator is a molecule that contains an oxygen-to-oxygen bond particularly weak against homolytic rupture which therefore serves as a source of free radicals and is therefore usable as an initiator in radical polymerization or grafting reactions. Peroxides, compounds with a general RO-OR structure, are the most commonly used radical initiators. Heating a peroxide causes the homolysis of the weak O-O bond, which forms two RO radicals• that are able to attach a double bond of an olefinic compound to initiate polymerization or extract a hydrogen from organic compounds to create a secondary radical on the molecule. Two free radicals can interact to create a covalent bond (combination reaction).

Radical stabilizer: they are molecules added to stabilize the primary free radical through resonance (delocalization on the unpaired electron molecule). They prevent the degradation of polymers by interrupting the removal reactions of hydrogen atoms from the chain (back bating) while they can give combination reactions between two radical species.

In the present invention the radical stabilizer is a molecule used to promote grafting because being able to stabilize the radical increases the probability of covalently binding the active polymer to the support through recombination of two radicals.

Grafting: In general, grafting refers to the grafting of molecules onto certain polymers in order to functionalize them. Here, we mean the formation of covalent bonds between the polyolefin support chains and the active polymer by means of radical reactions that then "graft" to the support

Activation of copolymer: transformation of the polymer into a positively charged ionomer, obtained by reaction of a tertiary amine with a benzyl halide.

### Example 1

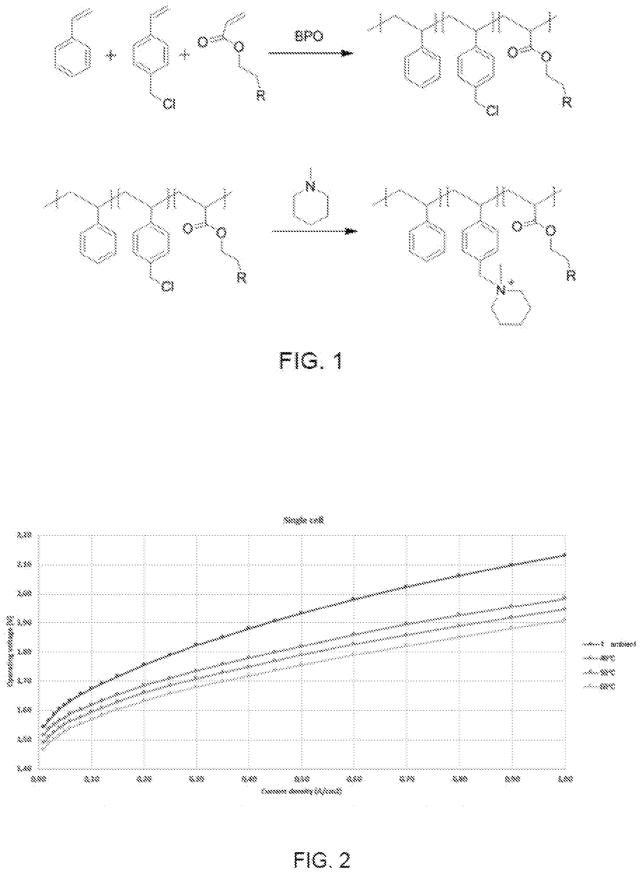

With reference to FIG. 1, an anionic exchange membrane comprising:
- a support made of porous polyolefin material; and
- a copolymer containing:
   i. monomeric units with positive charges, capable of migrating hydroxide ions,
   ii. monomeric units derived from acrylic monomers with saturated linear alkyl chains having a carbon number of 3 or more, and
   iii. monomeric units derived from vinyl aromatic monomers,

is obtained by inserting:
   - 56% in moles of styrene,
   - 34% in moles of 4-vinyl benzene chloride,
   - 9% in moles of octadecyl acrylate,
   - 1% in moles of benzoylperoxide
and maintaining the reactor with conditioned atmosphere for about 10 hours at 73 °C. An amount equal to 300% in moles (compared to the initial mixture in the reactor) of acetone (CH3 -CO-CH3 ) and continue to agitate until the polymer is completely dissolved.

Subsequently, 20% of N-methylpyperidine is added in moles (respect to the reactor mixture) and stirred for a further 10 hours by adding 160% in moles of ethanol (CH3-CH2-OH) to obtain an active copolymer in solution.

Finally, a support consisting of a sheet of polyethylene with a porosity of 60% and an average pore diameter of 0.6 µm is immersed in the solution obtained and left until the solvent has completely evaporated. In this phase the hydrocarbon chains of the active copolymer are crystallized with the surface of the support, with the consequent exposure and segregation of the positive charges within the pores of the support, so that an anionic exchange membrane is obtained according to the invention.

The performance of the anionic exchange membrane obtained in an electrolysis cell was measured by conducting polarization curves at various temperatures with a platinum-based cathode and a Ni/Fe/Co oxide-based anode at various temperatures. The results of the measurement tests are given in FIG. 2.

The Ionic Exchange Capacity (IEC) of the anionic exchange membrane obtained has been measured by basic acid titration following the following steps:
- activation of the membrane in KOH 1M for 24 hours;
- drying in an inert atmosphere;
- weighing, up to constant weight;
- membrane immersion in a known amount of 0.01M HCl for 24 hours;
- retro-titration of the acid solution with KOH with known concentration;
- calculation of ion exchange capacity according to the formula:$IEC = \left[\left(molf HCl - moles HCl\right)/m\right] * 1000$where:
   - molf HCl indicates the end moles of HCl, after membrane immersion,
   - HCl moles indicate the initial HCl moles, before membrane immersion,
   - m represents the dry membrane mass
   - the result is expressed in millimoles / gram.

These five-replicated experiments averaged an IEC of 1.9 mmol/g.

The electrical resistance and consequently the ionic conductivity of the anionic exchange membrane have been calculated by the following procedure:
- membrane activation in KOH for 24 hours and subsequent assembly in a 5cm2 electrolysis cell with nickel-based electrodes
- electrolysis for 1 minute (at 10ma/cm2) and subsequent measurement of resistance by HIOKI 3560 at 20 °C and 60 °C.

The same type of measurement was also carried out on the same membrane-free electrolysis cell, and the value obtained was subtracted from the previous value, in order to derive the effective electrical resistance of the membrane (Rm) through the formula:$Rm = \left(R1-R2\right) * A$ where:
- R1 indicates the total electrical resistance of the cell containing the membrane,
- R2 indicates the electrical resistance of the cell without membrane,
- A indicates the area of the electrode.

Ion conductivity (Y) was then derived from the following formula:$γ = S / \left(Rm*A\right)$ where S indicates the thickness of the membrane.

The conductivity of the membrane was found to be 35 ms/cm at 20°C and 75 ms/cm at 60°C.

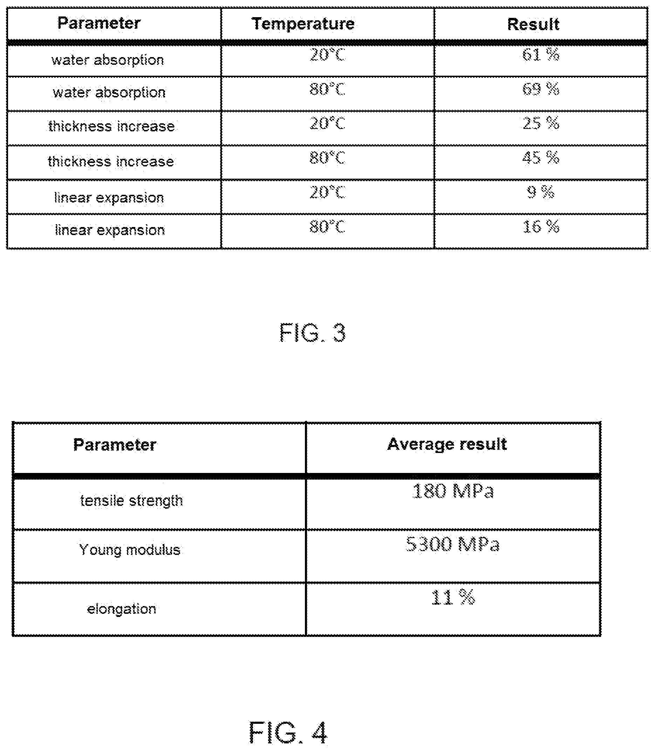

The anionic exchange membrane was measured for water absorption (at 20°C and 80°C) thickness increase (at 20°C and 80°C) and linear expansion (at 20°C and 80°C) in accordance with ISO 62:2008 (E). The results of the measurements are shown in the table in FIG. 3.

Measurements of tensile strength, Young modulus and percentage elongation were carried out on the anionic exchange membrane in accordance with ISO 153-7. Measurements were made with a Shimadzu AGS- X SKN instrument. The results are shown in the table of FIG. 4.

### Example 2

An anionic exchange membrane comprising:
- a support made of porous polyolefin material; and
- a copolymer containing:
   i. monomeric units with positive charges, capable of migrating hydroxide ions, and
   ii. monomer units derived from acrylic monomers with saturated linear alkyl chains having a carbon number of 3 or more, and
   iii. monomeric units derived from vinyl aromatic monomers,
is obtained by inserting:
54% in moles of styrene,
30% in moles of 4-vinyl chloride,
15% in moles of Esil-methacrylate,
1% in moles of benzoylperoxide
and maintaining the reactor with conditioned atmosphere for about 20 hours.

A quantity of 300% of acetone (CH3-CO-CH3) is then added to the reactor in moles (compared to the mixture in the reactor) and is kept in agitation until the polymer is completely dissolved.

A quantity of 1-methylpyrrolidine is added in moles (as opposed to the reactor mixture) and stirred for a further 40 hours, adding 150% in moles of ethanol.

Subsequently, it is added to the benzoyl peroxide solution equal to 1% in moles and 2% in moles of an olefin with hetero-grouparomatic, after which a support consisting of a sheet of polypropylene with a porosity of 50% and an average pore diameter of 0.5 µm is immersed in the solution obtained, keeping the whole in a conditioned atmosphere for about 10 hours at 73 °C.

A membrane according to the invention comprising a polypropylene support to which an active copolymer is chemically bonded is obtained by evaporation of the solvent.

The membrane has characteristics suitable for use in an alkaline electrolyzer in particular regarding mechanical properties, high ion exchange and conductivity, as well as high durability in an alkaline environment.

## Claims

1. Anionic exchange membrane comprising:
a. A porous support in polyolefin material; and
b. an active copolymer, that is containing monomeric units with positive charges, able to make the hydroxide ions migrate; said anionic exchange membrane being **characterized in that** said active copolymer also contains:
c. monomer units derived from acrylic monomers with saturated linear alkyl chains having a carbon number equal to or greater than 3,
d. styrene units, and
e. vinyl-benzyl units with benzyl-bound substituents, said substituents belonging to the family of piperidines and/or pyrrolidines,
so that said copolymer is able to bind chemically, through hydrophobic interactions, with said support in polyolefin material.

2. Anionic exchange membrane according to claim 1 **characterized in that** said piperidines and/ or pyrrolidines are N-alkyl-piperidine and/ or N-alkyl-pyrrolidine.

3. Anionic exchange membrane according to one of the previous claims **characterized in that** said active copolymer consists of the polymerization product of at least:
- acrylic monomers with saturated linear alkyl chains having a carbon number equal to or greater than 3;
- vinyl-benzyl monomers having a methyl chloride group bound to the aromatic ring; and
- vinyl-aromatic monomers with piperidine and/or pyrrolidine tertiary amines.

4. Anionic exchange membrane according to the previous claim **characterized in that** said tertiary piperidine and/or pyrrolidine amines include at least one between 1-methylpyridine, 1-ethylpyridine, 1-propylhyperidine, 1-butylpiperidine, 1,2,6-trimethylpyridine, 1,2,6-triethylpiperidine, 1,2,6-tripropylpiperidine, 1,2,2,6,6-pentamethylpiperidine, 1-methylpyrrolidine, 1-ethylpyrrolidine, 1-propylpyrrolidine, 1-buthylpyrrolidine, 1,2,5-trimethylpyrrolidine.

5. Anionic exchange membrane according to claim 3 or 4 **characterized in that** said acrylic monomers are esters of acrylic acid that bind to the ester oxygen atom a linear saturated hydrocarbon chain.

6. Anionic exchange membrane according to the previous claim **characterized in that** said acrylic monomers include at least one between propyl acrylate, butyl acrylate, pentyl acrylate, heptyl acrylate, octyl acrylate, nonyl acrylate, Acrylate, acrylate, dodecyl acrylate, tridecyl acrylate, tetradecyl acrylate, pentadecyl acrylate, hexadecyl acrylate, heptaecil acrylate, octadecyl acrylate, nonadecil acrylate, icosil acrylate, propyl methacrylate, butyl methacrylate, pentyl methacrylate, Hexyl methacrylate, heptyl methacrylate, octyl methacrylate, nonyl methacrylate, decyl methacrylate, undecil methacrylate, dodecyl methacrylate, tridecyl methacrylate, tetradecyl methacrylate, pentadecyl methacrylate, hexadecyl methacrylate, heptaecyl methacrylate, octadecyl methacrylate, nonadecil methacrylate, icosil methacrylate.

7. Anionic exchange membrane according to one of the previous claims **characterized in that** said copolymer contains, in moles, from 3% to 10% of acrylic units, from 40% to 79% of vinyl-aromatic units and from 20% to 50% of vinyl-benzyl units with substituent.

8. Anionic exchange membrane according to one of the previous claims **characterized in that** said support in polyolefin material consists of a polyethylene-based material chosen from PE, LDPE, HDPE or UHMWPE.

9. Anionic exchange membrane according to one of the claims 1 to 7 **characterized in that** said support in polyolefin material consists of a polypropylene-based material.

10. Method for the construction of an anionic exchange membrane according to one of claims 1 to 9, comprising phases of:
a) promoting by means of at least one peroxidic radical initiator the polymerisation of a mixture comprising:
i) acrylic monomers with saturated linear alkyl chains having a carbon number equal to or greater than 3;
ii) vinyl-benzyl monomers having an methyl chloride group bound to the aromatic group, and
iii) vinyl-aromatic monomers,
b) activating the copolymer obtained by means of tertiary piperidine and/or pyrrolidine amines by promoting the formation of quaternary ammonium salts by substitution of at least one vinyl-benzyl chloride monomer, and
c) promoting the binding of the copolymer to a porous polyolefin support by immersing a film of said
polyolefin support in said copolymer in liquid solution in the presence of a polar solvent.

11. Method for the realization of an anionic exchange membrane according to the previous claim wherein:
- the phase of activating the copolymer takes place prior to the phase of promoting the binding of the copolymer to a polyolefin carrier;
- said polyolefin support is based on polyethylene.

12. Method for the realization of an anionic exchange membrane according to claim 10 wherein the phase of promoting the binding of the copolymer to a polyolefin support takes place by adding in the liquid solution containing said copolymer and said porous polyolefin support a peroxy radical activator and a radical stabilizer consisting of an olefin with aromatic group and/ or heteroaromatic.

## Patentansprüche

1. Anionenaustauschmembran, umfassend:
a. einen porösen Träger aus Polyolefinmaterial; und
b. ein aktives Copolymer, das Monomereinheiten mit positiven Ladungen enthält und in der Lage ist, die Hydroxidionen zu migrieren;
wobei die Anionenaustauschmembran **dadurch gekennzeichnet ist, dass** das aktive Copolymer außerdem enthält:
c. Monomereinheiten, die von Acrylmonomeren mit gesättigten linearen Alkylketten mit einer Kohlenstoffzahl von mindestens 3 abgeleitet sind,
d. Styroleinheiten und
e. Vinylbenzyl-Einheiten mit benzylgebundenen Substituenten, wobei die Substituenten zur Familie der Piperidine und/oder Pyrrolidine gehören, sodass das Copolymer in der Lage ist, sich durch hydrophobe Wechselwirkungen chemisch an den Träger aus Polyolefinmaterial zu binden.

2. Anionenaustauschmembran nach Anspruch 1, **dadurch gekennzeichnet, dass** die Piperidine und/oder Pyrrolidine N-Alkyl-piperidine und/oder N-Alkylpyrrolidine sind.

3. Anionenaustauschmembran nach einem der vorstehenden Ansprüche, **dadurch gekennzeichnet, dass** das aktive Copolymer aus dem Polymerisationsprodukt von mindestens folgenden Komponenten besteht:
- Acrylmonomere mit gesättigten linearen Alkylketten, deren Kohlenstoffzahl gleich oder größer als 3 ist;
- Vinylbenzylmonomere mit einer an den aromatischen Ring gebundenen Methylchloridgruppe; und
- vinylaromatische Monomere mit tertiären Piperidin- und/oder Pyrrolidinaminen.

4. Anionenaustauschmembran gemäß dem vorstehenden Anspruch, **dadurch gekennzeichnet, dass** die tertiären Piperidin- und/oder Pyrrolidinamine mindestens eine der folgenden Verbindungen umfassen: 1-Methylpyridin, 1-Ethylpyridin, 1-Propylpyridin, 1-Butylpiperidin, 1,2,6-Trimethylpyridin, 1,2,6-Triethylpiperidin, 1,2,6-Tripropylpiperidin, 1,2,2,6,6-Pentamethylpiperidin, 1-Methylpyrrolidin, 1-Ethylpyrrolidin, 1-Propylpyrrolidin, 1-Butylpyrrolidin und 1,2,5-Trimethylpyrrolidin.

5. Anionenaustauschmembran nach Anspruch 3 oder 4, **dadurch gekennzeichnet, dass** die Acrylmonomere Ester der Acrylsäure sind, bei denen eine lineare, gesättigte Kohlenwasserstoffkette an das Ester-Sauerstoffatom gebunden ist.

6. Anionenaustauschmembran nach dem vorstehenden Anspruch, **dadurch gekennzeichnet, dass** die Acrylmonomere mindestens eines der folgenden Monomere umfassen: Propylacrylat, Butylacrylat, Pentylacrylat, Heptylacrylat, Octylacrylat, Nonylacrylat, Acrylat, Acrylat, Dodecylacrylat, Tridecylacrylat, Tetradecylacrylat, Pentadecylacrylat, Hexadecylacrylat, Heptadecylacrylat, Octadecylacrylat, Nonadecylacrylat, Icosylacrylat, Propylmethacrylat, Butylmethacrylat, Pentylmethacrylat, Hexylmethacrylat, Heptylmethacrylat, Octylmethacrylat, Nonylmethacrylat, Decylmethacrylat, Undecylmethacrylat, Dodecylmethacrylat, Tridecylmethacrylat, Tetradecylmethacrylat, Pentadecylmethacrylat, Hexadecylmethacrylat, Heptaecylmethacrylat, Octadecylmethacrylat, Nonadecylmethacrylat, Icosylmethacrylat.

7. Anionenaustauschmembran gemäß einem der vorstehenden Ansprüche, **dadurch gekennzeichnet, dass** das Copolymer, in Mol, 3 % bis 10 % Acryleinheiten, 40 % bis 79 % vinylaromatische Einheiten und 20 % bis 50 % substituierte Vinylbenzyleinheiten enthält.

8. Anionenaustauschmembran gemäß einem der vorstehenden Ansprüche, **dadurch gekennzeichnet, dass** der Träger aus Polyolefinmaterial aus einem Material auf Polyethylenbasis besteht, das aus PE, LDPE, HDPE oder UHMWPE ausgewählt ist.

9. Anionenaustauschmembran gemäß einem der Ansprüche 1 bis 7, **dadurch gekennzeichnet, dass** der Träger aus Polyolefinmaterial aus einem Material auf Polypropylenbasis besteht.

10. Verfahren zur Herstellung einer anionischen Austauschmembran gemäß einem der Ansprüche 1 bis 9, das die folgenden Schritte umfasst:
a) Förderung der Polymerisation einer Mischung mittels mindestens eines peroxidischen Radikalinitiators, wobei die Mischung die Folgendes umfasst:
i. Acrylmonomere mit gesättigten linearen Alkylketten mit einer Kohlenstoffzahl von 3 oder mehr;
ii. Vinylbenzyl-Monomere mit einer an die aromatische Gruppe gebundenen Methylchloridgruppe, und
iii. vinylaromatische Monomere,
b) Aktivierung des erhaltenen Copolymers mittels tertiärer Piperidin- und/oder Pyrrolidinamine durch Förderung der Bildung von quaternären Ammoniumsalzen durch Substitution mindestens eines Vinylbenzylchlorid-Monomers, und
c) Förderung der Bindung des Copolymers an einen porösen Polyolefin-Träger durch Eintauchen einer Folie des Polyolefin-Trägers in das Copolymer in flüssiger Lösung in Gegenwart eines polaren Lösungsmittels.

11. Verfahren zur Herstellung einer Anionenaustauschmembran gemäß dem vorstehenden Anspruch, wobei:
- die Phase der Aktivierung des Copolymers vor der Phase der Förderung der Bindung des Copolymers an einen Polyolefin-Träger stattfindet;
- der Polyolefin-Träger auf Polyethylen basiert.

12. Verfahren zur Herstellung einer Anionenaustauschmembran gemäß Anspruch 10, wobei der Schritt zur Förderung der Bindung des Copolymers an einen Polyolefin-Träger dadurch erfolgt, dass der flüssigen Lösung, die das Copolymer und den porösen Polyolefin-Träger enthält, ein Peroxy-Radikalaktivator und ein Radikalstabilisator, bestehend aus einem Olefin mit einer aromatischen und/oder heteroaromatischen Gruppe, zugesetzt werden.

## Revendications

1. Membrane d'échange anionique comprenant :
a. un support poreux en polyoléfine ; et
b. un copolymère actif, c'est-à-dire contenant des unités monomères porteurs de charges positives, capable de faire migrer les ions hydroxyde ;
ladite membrane échangeuse d'anions étant **caractérisée en ce que** ledit copolymère actif contient également :
c. des unités monomères dérivés de monomères acryliques à chaînes alkyliques linéaires saturées ayant un nombre d'atomes de carbone égal ou supérieur à 3,
d. des unités styrène, et
e. des unités vinyl-benzyle comportant des substituants liés au benzyle, lesdits substituants appartenant à la famille des pipéridines et/ou des pyrrolidines,
de sorte que ledit copolymère est capable de se lier chimiquement, par le biais d'interactions hydrophobes, audit support en polyoléfine.

2. Membrane d'échange anionique selon la revendication 1, **caractérisée en ce que** lesdites pipéridines et/ou pyrrolidines sont des N-alkyl-pipéridines et/ou des N-alkyl-pyrrolidines.

3. Membrane d'échange anionique selon l'une des revendications précédentes, **caractérisée en ce que** ledit copolymère actif est constitué du produit de polymérisation d'au moins :
- des monomères acryliques à chaînes alkyliques linéaires saturées ayant un nombre d'atomes de carbone égal ou supérieur à 3 ;
- des monomères vinyl-benzyliques comportant un groupe chlorure de méthyle lié au cycle aromatique ; et
- des monomères vinyl-aromatiques contenant des amines tertiaires de type pipéridine et/ou pyrrolidine.

4. Membrane d'échange anionique selon la revendication précédente, **caractérisée en ce que** lesdites amines tertiaires de pipéridine et/ou de pyrrolidine comprennent au moins l'une des substances suivantes : la 1-méthylpyridine, la 1-éthylpyridine, la 1-propylpyridine, la 1-butylpipéridine, la 1,2,6-triméthylpyridine, la 1,2,6-triéthylpipéridine, la 1,2,6-tripropylpipéridine, la 1,2,2,6,6-pentaméthylpipéridine, la 1-méthylpyrrolidine, la 1-éthylpyrrolidine, la 1-propylpyrrolidine, la 1-butylpyrrolidine et la 1,2,5-triméthylpyrrolidine.

5. Membrane d'échange anionique selon la revendication 3 ou 4, **caractérisée en ce que** lesdits monomères acryliques sont des esters de l'acide acrylique qui lient à l'atome d'oxygène de l'ester une chaîne hydrocarbonée linéaire saturée.

6. Membrane d'échange anionique selon la revendication précédente, **caractérisée en ce que** lesdits monomères acryliques comprennent au moins l'un des composés suivants : acrylate de propyle, acrylate de butyle, acrylate de pentyle, acrylate d'heptyle, acrylate d'octyle, acrylate de nonyle, acrylate, acrylate, acrylate de dodécyle, acrylate de tridécyle, acrylate de tétradécyle, acrylate de pentadécyle, acrylate d'hexadécyle, acrylate d'heptadécyle, acrylate d'octadécyle, acrylate de nonadécyle, acrylate d'icosyle, méthacrylate de propyle, méthacrylate de butyle, méthacrylate de pentyle, méthacrylate d'hexyle, méthacrylate d'heptyle, méthacrylate d'octyle, méthacrylate de nonyle, méthacrylate de décyle, méthacrylate d'undécyle, méthacrylate de dodécyle, méthacrylate de tridécyle, méthacrylate de tétradécyle, méthacrylate de pentadécyle, méthacrylate d'hexadécyle, méthacrylate d'heptaécyle, méthacrylate d'octadécyle, méthacrylate de nonadécyle, méthacrylate d'icosyle.

7. Membrane d'échange anionique selon l'une des revendications précédentes, **caractérisée en ce que** ledit copolymère contient, en moles, de 3 % à 10 % de unités acryliques, de 40 % à 79 % de unités vinylaromatiques et de 20 % à 50 % de unités vinylbenzyliques substitués.

8. Membrane d'échange anionique selon l'une des revendications précédentes, **caractérisée en ce que** ledit support en polyoléfine est constitué d'un matériau à base de polyéthylène choisi parmi le PE, le LDPE, le HDPE ou l'UHMWPE.

9. Membrane d'échange anionique selon l'une des revendications 1 à 7, **caractérisée en ce que** ledit support en polyoléfine est constitué d'un matériau à base de polypropylène.

10. Procédé de fabrication d'une membrane d'échange anionique selon l'une des revendications 1 à 9, comprenant les étapes suivantes :
a) favoriser, au moyen d'au moins un initiateur de radicaux peroxydiques, la polymérisation d'un mélange comprenant :
i. des monomères acryliques à chaînes alkyliques linéaires saturées ayant un nombre d'atomes de carbone égal ou supérieur à 3 ;
ii. des monomères vinyl-benzyliques comportant un groupe chlorure de méthyle lié au groupe aromatique, et
iii. des monomères vinyl-aromatiques,
b) l'activation du copolymère obtenu au moyen d'amines tertiaires de pipéridine et/ou de pyrrolidine en favorisant la formation de sels d'ammonium quaternaire par substitution d'au moins un monomère de chlorure de vinyl-benzyle, et
c) favoriser la liaison du copolymère à un support en polyoléfine poreux en immergeant un film dudit support en polyoléfine dans ledit copolymère en solution liquide en présence d'un solvant polaire.

11. Procédé de réalisation d'une membrane d'échange anionique selon la revendication précédente, dans lequel :
- l'étape d'activation du copolymère a lieu avant l'étape consistant à favoriser la liaison du copolymère à un support en polyoléfine ;
- ledit support en polyoléfine est à base de polyéthylène.

12. Procédé de réalisation d'une membrane d'échange anionique selon la revendication 10, dans lequel la phase de favorisation de la liaison du copolymère à un support en polyoléfine s'effectue en ajoutant, dans la solution liquide contenant ledit copolymère et ledit support en polyoléfine poreux, un activateur de radicaux peroxy et un stabilisateur de radicaux constitué d'une oléfine comportant un groupe aromatique et/ou hétéroaromatique.
